# EUROPEAN PATENT APPLICATION

(11) **EP 4 831 600 A1**
(43) Date of publication of application: **28.10.2026**
(21) Application number: 26174203.5
(22) Date of filing: 23.04.2026
(51) Int. Cl.: G01J 4/04, G01N 21/21, G01N 21/88

(54) **DEVICE AND METHOD FOR DETECTING SURFACE DEFECTS ON MOVING CERAMIC SLABS**

(30) Priority: 23.04.2025 IT 202500009087; 09.03.2026 IT 202600006178
(71) Applicant: Gruppo TecnoFerrari SpA, 41042 Fiorano Modenese (MO) (IT)
(72) Inventor: FERRARI, Donatella, 41049 Sassuolo (MO) (IT); MONTECCHI, Luca, 42013 Casalgrande (RE) (IT)
(74) Representative: Ing. C. Corradini & C. S.R.L.

(57) **Abstract**

A device (10) for detecting surface defects on a moving ceramic slab (L) comprising:
- a support plane (21) on which at least one slab (L) transits along an advancement direction (A) parallel to the support plane (21);
- at least one detection apparatus (40), wherein the detection apparatus is arranged above the support plane (21), at a non-zero distance therefrom, wherein:
the detection apparatus (40) comprises:
a light source (41) configured to emit a light beam directed along a prevailing emission direction incident on the support plane (21) to illuminate at least a portion of a visible surface (L1) of the slab (L) in transit on the support plane (21);
at least one still and/or video polarisation camera (42) configured to capture raw polarisation frames corresponding to a plurality of different polarisation states of the visible surface portion (L1) illuminated by the light source (41); and

an electronic control unit configured to identify a defect on the basis of processing the raw polarisation frames.

## Description

### TECHNICAL FIELD

The present invention relates to a device and a method for detecting surface defects on moving ceramic slabs, in particular for the inspection of defects introduced during the lapping process of ceramic slabs (preferably large formats).

### PRIOR ART

In the ceramic industry, particularly for large formats or slabs, the lapping process has introduced new types of defects that are currently difficult or almost impossible for operators to detect by visual inspection or by existing automatic vision systems.

These defects include the following main types.
a) Circular micro-scratches caused by the circular rubbing of brushes or grinding wheels, potentially only present in some areas.
b) Peeling, caused by excessive lapping that locally reduces or eliminates the vitrified surface layer, thus altering the tone (colour) of the underlying design. This defect may occur near the edges or in areas where the flatness of the tile is not correct.
c) Unpolished areas, caused by a lack of or insufficient lapping, resulting in a dull, rough surface.

The incidence of these defects, which cannot be detected by current automated vision systems, is not precisely quantifiable, but is assumed to exceed 3% of the lapped material, inevitably leading to complaints from customers. In addition, new types of defects resulting from the lapping process may emerge in the future, for example during the laying of slabs.

Currently, there are no vision systems available in the ceramic market that can identify these types of defects and meet these needs.

In particular, a need perceived in the industry is to be able to identify such otherwise non-visible defects, indicate them and possibly classify ceramic slabs accordingly.

### DISCLOSURE OF THE INVENTION

An object of the present invention is to satisfy these and other needs of the prior art, within the framework of a simple, rational and low cost solution.

Such aims are achieved by the features of the invention set forth in the independent claim. The dependent claims outline preferred and/or particularly advantageous aspects of the invention.

The invention, in particular, provides a device for detecting surface defects on a moving ceramic slab, comprising a support plane configured to convey at least one slab along an advancement direction parallel to the support plane; and at least one detection apparatus positioned above the support plane at a non-zero distance therefrom, wherein the detection apparatus includes a light source configured to emit a light beam directed along a prevailing emission direction incident on the support plane to illuminate at least a portion of a visible surface of the slab in transit on the support plane, and at least one polarisation camera configured to capture raw polarisation frames corresponding to a plurality of different polarisation states of the illuminated surface portion.

For example, the detection apparatus comprises (or is connected to) an electronic control unit configured to identify a defect in the slab surface on the basis of processing (using special characterisation algorithms) of the raw polarisation frames, as further described below.

This makes it possible to detect surface defects on ceramic slabs (in motion, i.e. within their production process and without altering their progress at the speed set by the production line) that are not visible with conventional vision systems.

According to a preferred embodiment of the invention, the detection apparatus may comprise a plurality of polarisation cameras arranged side-by-side along a direction parallel to the support plane and inclined, preferably orthogonal, to the advancement direction, wherein each camera is configured to scan a respective part of the illuminated portion of the surface (e.g. with slight overlap).

This allows optimal detection coverage and high resolution of surface defects to be achieved.

According to a preferred embodiment of the invention, the detection apparatus may comprise at least one electronic control unit operatively connected to the at least one polarisation camera, configured to receive one or more raw polarisation frames of the same portion of the illuminated surface captured at different polarisations by the at least one polarisation camera; generate a combined image based on the received raw polarisation frames; identify a defect in the generated combined image; and (optionally) indicate a detected defect to a display device and, preferably, its location in the image of the slab, for example if the detected defect has a size greater than a predetermined reference size and/or an intensity greater than a predetermined reference intensity.

Thanks to this, the device has the ability to process and classify defects automatically, improving inspection accuracy.

According to a preferred embodiment of the invention, the generation of the combined image may be achieved by calculating the polarisation angle and/or the degree of polarisation and, preferably, linking the angle and degree of polarisation in a single combined image.

This enables improved visibility of defects through enhanced image contrast and clarity. According to a preferred embodiment of the invention, each polarisation camera may comprise an image sensor, preferably a complementary metal-oxide-semiconductor (CMOS) image sensor, and a polarising filter positioned in the optical path between the visible surface of the ceramic slab and the image sensor.

Thanks to the above, improved detection capability is made possible by advanced sensor technology.

According to a preferred embodiment of the invention, the polarising filter comprises a polarisation mosaic aligned with the pixel grid of the image sensor, so that different pixels receive light at different linear polarisation angles (e.g., at 0°, 45°, 90° and 135°), enabling each polarisation camera to capture raw frames at four different linear polarisations simultaneously.

Therefore, the ability to capture detailed polarisation information for improved defect detection is optimised, with a device that is simple, effective, inexpensive and efficient.

According to a preferred embodiment of the invention, the light beam may be directed along a prevailing emission direction incident on the support plane and inclined with respect to the support plane by an acute angle, preferably comprised between 30° and 40°, for example 34°.

This allows optimal illumination for defect detection under varying surface conditions and, preferably, suitable for (matte) ceramic materials.

According to a preferred embodiment of the invention, the optical axis of each polarisation camera may be incident on the support plane and inclined with respect to the support plane by an acute angle, preferably symmetrical with respect to the acute angle of incidence of the light beam emitted by the light source (so as to detect the light reflected by the visible - preferably lapped - surface portion of the ceramic slab illuminated by the light source).

Thanks to this, better alignment can be achieved to capture polarisation data with minimal distortion.

In a further advantageous aspect, the electronic control unit can be configured to apply a non-uniformity, or "flat-field" correction to the combined image. This reduces systematic artefacts, both longitudinal and transverse, ensuring that the variations detected in the image are attributable solely to the morphology of the slab and not to imperfections in the measurement system, thus increasing the detection reliability.

Advantageously, the electronic control unit can apply a bank of convolutional filters to the combined image. This processing makes it possible to selectively emphasise structures corresponding to predetermined families of defects, such as scratches or stains, significantly improving their contrast against the background and making them more easily identifiable in subsequent steps.

In another advantageous aspect, the electronic control unit can be configured to perform image segmentation in order to identify objects representing possible defects and to calculate a vector of geometric and/or photometric characteristics for each of them. This process transforms visual information into structured, quantitative data, laying the foundation for an objective and repeatable classification of defects.

In addition, the electronic control unit, operating on the identified objects, can perform logical post-processing. This may include joining fragments to reconstruct a real defect and calculating a quality score to determine the acceptability of the slab. This intelligent interpretation step allows for a robust and reliable final decision, reducing false alarms and increasing the accuracy of the overall quality judgement.

According to a preferred embodiment of the invention, a ceramic slab processing plant is provided, comprising at least one machine for lapping and/or polishing the visible surface of ceramic slabs; and at least one device, as described above, positioned downstream of the lapping and/or polishing machine along the advancement direction.

This enables the detection of defects in the production line, in real time, before the ceramic slabs are packaged.

According to a preferred embodiment of the invention, for the same purposes as above, a method for detecting a surface defect on a (moving) slab is provided, comprising: arranging at least one slab on a support plane (e.g. moving the slab on a support plane along an advancement direction parallel to the support plane); irradiating a portion of the slab with a light beam emitted by a light source, wherein the light beam is incident on a surface of the slab and the slab is in relative motion with respect to the light source along an advancement direction parallel to the support plane; (i.e. illuminating a moving portion of the slab with a light beam, wherein the light beam is incident on the upper surface of the slab with respect to an angle of incidence, preferably acute) capturing raw polarisation frames corresponding to a plurality of different polarisation states of the illuminated portion of the surface; generating a combined image on the basis of the received raw polarisation frames; identifying a defect in the generated combined image; and optionally indicate a detected defect to a display device and, preferably, its position in the combined image of the slab, for example if the detected defect has a dimension greater than a predetermined reference dimension and/or an intensity greater than a predetermined reference intensity.

### BRIEF DESCRIPTION OF THE DRAWINGS

Further features and advantages of the invention will be more apparent after reading the following description provided by way of non-limiting example, with the aid of the figures illustrated in the accompanying drawings.
Figure 1 is a schematic side view in longitudinal section of a device according to the invention.
Figure 2 is a schematic plan view from above (in partial section) of the device in Figure 1.
Figure 3 is a schematic view of the detection apparatus in Figure 1.
Figure 4 is an exploded schematic view of a part of an image sensor of a still or video polarisation camera of the detection apparatus according to the invention.
Figure 5 is a schematic cross-sectional view of a portion of the image sensor of a still or video polarisation camera of the apparatus according to the invention.

### BEST MODE OF THE INVENTION

With particular reference to these figures, a device for detecting surface defects on (a visible surface of) a (matte/non-transparent/translucent) slab L, e.g. a ceramic slab (previously subjected to grinding/lapping and/or polishing), in motion, has been comprehensively referred to as 10.

The term "surface defects" as used herein refers to micro-scratches, peeling, unprocessed or insufficiently processed areas, or the like (attributable to errors in the grinding/lapping and/or polishing process).

The device 10 comprises a support 20 for supporting at least one slab L resting on its own lower (main) support surface, also referred to as the laying surface, opposite the upper surface L1 (main or also referred to as the visible surface) to be checked with the device.

The support 20 comprises a horizontal support plane 21 on which the slabs L are to be placed with their surface L1 to be checked facing upwards.

The support 20 preferably comprises an advancement unit for advancing the slab L supported on the support plane 21 along a predetermined advancement direction A belonging to the support plane 21 (i.e. horizontal), e.g. substantially straight.

In the preferred example shown, the advancement unit comprises a conveyor. Preferably, but not limited to, the conveyor is configured to support at least one slab L (i.e. one or more slabs L in succession) resting on its own lower surface opposite the upper surface L1 to be decorated.

The conveyor comprises a support frame with ground supports and a conveyor assembly supported by the support frame, only schematically indicated (as it is of a known type). The conveyor assembly preferably comprises or is defined by a conveyor belt 210 of a belt conveyor.

The conveyor belt is defined by a (single) flexible belt wrapped around itself in a loop around at least one drive roller and at least one (end) driven roller.

The conveyor assembly, i.e. the upper branch of the conveyor belt 210, defines a (horizontal) support plane on which the slabs L are intended to rest (stable), with their lower surface.

The drive roller is configured to move/rotate the conveyor belt along a closed annular path, so that the upper branch of the conveyor belt moves on a horizontal plane along (a single advancement direction of) a preset advancement direction A (while an opposite lower branch moves on a parallel horizontal plane in an opposite return direction of the same advancement direction A).

The rotation speed of the drive roller controls the advancement speed of the slabs (which rest on the support plane defined by the conveyor belt 210) along the advancement direction A, which may be set and adjusted according to processing requirements.

For example, the advancement speed is constant (and essentially equal to the advancement speed of the slabs L in the production line where the device 10 is located).

The conveyor assembly is, thus, configured to move the slabs L resting on the support plane along a (single) advancement direction A parallel to the support plane itself (i.e. horizontal), e.g. with an advancement speed that can be set and/or adjusted according to work requirements.

The conveyor assembly, for this purpose, comprises a drive motor (not shown) configured to rotate the drive roller onto which the conveyor belt 210 is wound.

The support 20 (i.e. the conveyor) is inserted into a customary slab conveyor line, e.g. roller type (as illustrated) or belt type, which takes the slabs L (in succession) to the conveyor and takes the slabs L exiting the conveyor to the next processing stations of the production plant (or end-of-line) of the slabs L of tiles.

For example, the tile forming plant comprises, upstream of the device 10 along the conveyor line, at least one lapping and/or polishing machine (or more) of the visible surface L1 of the slabs L, which is then inspected by the device 10.

For example, the width of the support plane 21 is, for example, defined by the width of the conveyor belt 210 (horizontal and orthogonal to the advancement direction A).

The advancement unit could alternatively be defined by a belt conveyor or other conveyor of a type known in the sector of conveying slabs L.

For example, the device 10 comprises a support casing 30 (or box frame), e.g. surmounting the support plane 21, e.g. a bridge.

The support casing 30 is rigidly attached to the support frame of the support 20.

For example, the support casing 30 comprises a (vertical) front wall which precedes, along the advancement direction A, an opposing (vertical) rear wall, in which openings are made (in proximity to the support plane 21) such as to allow the passage of the slabs L along the advancement direction A (which cross the support casing 30 in their advancement motion).

The support casing 30 comprises, for example, a longitudinal cross member 31 extending with its own longitudinal axis parallel to the support plane 21 (horizontal) and orthogonal to the advancement direction A.

The cross member 31 is supported (in a fixed manner) in suspension above the support plane 21 (e.g. in a predetermined axial position along the advancement direction A).

For example, the cross member 31 is fixed to the front wall of the support casing 30 (inside it).

The device 10 further comprises at least one detection apparatus 40 configured to detect surface defects on the (visible surfaces L1 of the) slabs L in transit on the support plane 21, i.e., during the advancement movement on the support plane 21 along the advancement direction A thereof.

The detection apparatus 40, in particular, as will be better described below, is configured/sized to detect and scan the entire surface L1 (both in the direction parallel to the advancement direction A and for the direction orthogonal to the advancement direction A and parallel to the support plane 21) in a single pass.

The detection apparatus 40 is arranged above the support plane 21, at a non-zero distance therefrom, as will be better described below.

The detection apparatus 40 extends along a longitudinal axis parallel to the support plane 21 (horizontal) and is inclined, preferably orthogonal, to the advancement direction A. Preferably, the detection apparatus 40 has a length substantially equal to the width of the support plane 21 (and/or the maximum width of the slabs L to be processed in the production line or verified with the device 10), as will be better described below.

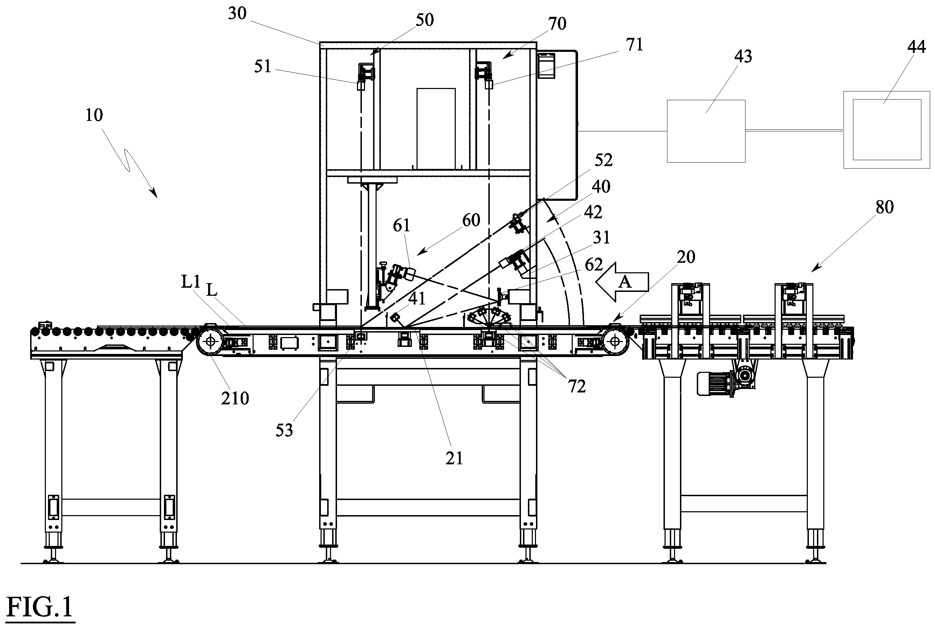

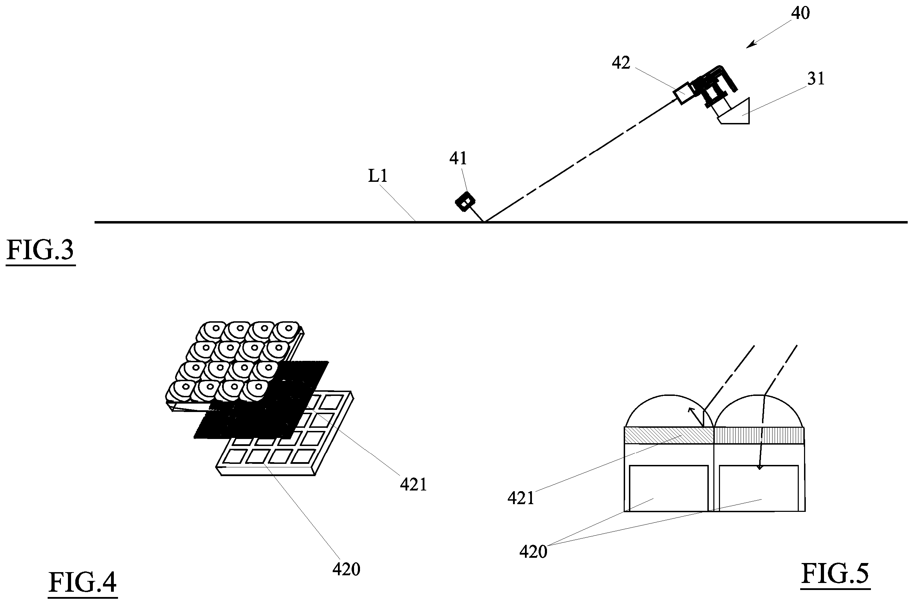

The detection apparatus 40 comprises a light source 41 configured to emit a directed beam of emitted light (illustrated schematically in Figure 1 and in Figure 3).

Here, a directed beam is understood to mean a beam of light that predominantly extends along a prevailing direction (or axis of the beam).

For example, the light source 41 is of the semiconductor or LED type.

The light source 41 is configured to emit a beam of light in the visible range (i.e. the human-visible portion of the electromagnetic spectrum).

Preferably, the light source 41 is a longitudinal bar having a preferably straight longitudinal axis (emitting the light beam in a radial direction with respect to the longitudinal axis, for the entire length of the light source 41 itself).

The light source 41 has a length substantially equal to the width of the support plane 21 (and/or the maximum width of the slabs L to be processed in the production line or verified with the device 10), so that the emitted light beam can strike a full width of the slab L in transit on the support plane 21.

The light source 41 is configured to emit the light beam so that it is directed towards the support plane 21 at a predetermined angle of inclination with respect to the support plane 21.

The predetermined angle of inclination is, for example, a function of the material of which the (surface L1 of the) slab L is made.

Specifically, the light beam is directed along a prevailing emission direction incident upon the support plane 21 and inclined with respect to the support plane by an acute angle, preferably comprised between 30° and 40° (depending on the material of which the surface L1 of the slab L is made).

For example, for a ceramic slab (i.e. a ceramic surface L1), the predetermined angle of inclination is (approximately) 33°.

The central plane of the emitted light beam defines an emission path of the light beam emitted by the light source 41 to the surface L1 of the slab L (in transit below the detection apparatus 40).

In practice, the light source 41 illuminates a portion (or full-width band) of surface L1 as it advances along the advancement direction A.

Preferably, the light source 41 is attached to (the interior of) the support casing 30, e.g. supported at its opposing axial ends by side walls thereof.

In the example, the light source 41 is configured to direct the emitted light beam rearwardly (or discordantly) with respect to the advancement sense of the slabs L along the advancement direction A.

For example, the light source 41 may comprise a collimator configured to collimate/straighten the emitted light beam (e.g. to narrow the emission fan) and placed in the emission path of the emitted light beam.

Then, then detection apparatus 40 comprises at least one vision system provided with at least one still and/or video polarisation camera 42 configured to capture raw polarisation frames (RAW) corresponding to a plurality of different polarisation states of the (full-width portion or band of) visible surface of a (any) slab L in transit on the support plane 21 and which is illuminated by the light source 41.

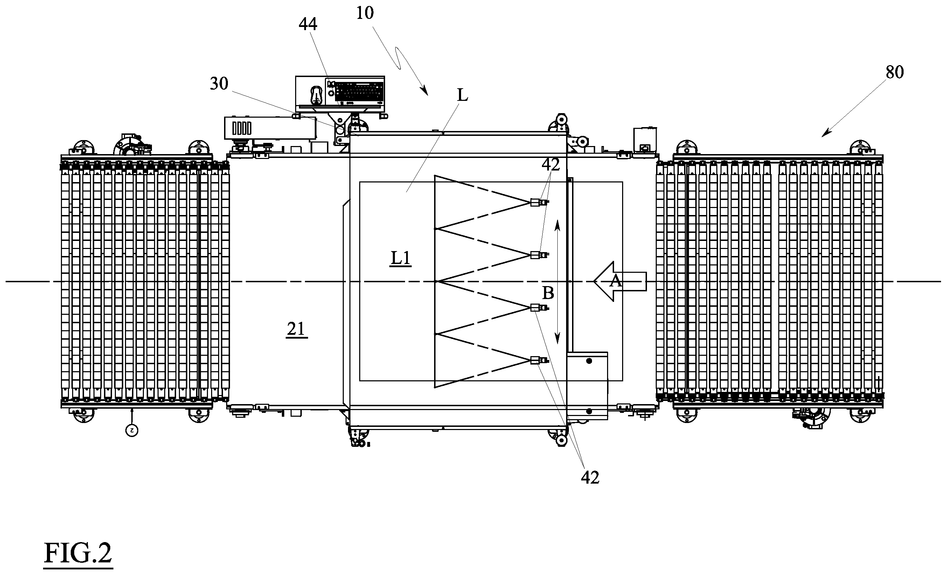

Preferably (especially for large formats), the detection apparatus 40 comprises a vision system formed by a plurality of still and/or video polarisation cameras 42 (identical to each other) side-by-side along a side-by-side direction B parallel to the support plane 21 (horizontal) and inclined preferably orthogonal, to the advancement direction A, wherein each still and/or video polarisation camera 42 is configured to scan a relative portion (with slight lateral overlap, of a few millimetres) of said portion of the visible surface L1 illuminated by the light source 41, see Figure 2.

Preferably, each still and/or video polarisation camera 42 is attached to the cross member 31, in a predetermined (and fixed) axial position thereof.

Each still and/or video polarisation camera 42 (or polarimetric camera) comprises a lens with a field of view and an optical axis, wherein the optical axis, wherein the optical axis (the field of view and, therefore, the still and/or video polarisation camera 42 is oriented to frame the relevant portion (or sector) of the visible surface L1 illuminated by the light source 41.

Each still and/or video polarisation camera 42 further comprises a photosensitive support, such as an image sensor 420 (see Figures 4 and 5), for example a complementary metal-oxide-semiconductor (CMOS) image sensor.

The lens is configured to direct the reflected light from the relative part of visible surface portion surface portion L1 illuminated by the light source 41 (e.g. focus) onto the image sensor 420, which for example is arranged at the focal plane of the lens.

Each still and/or video polarisation camera 42 comprises at least one polarising filter 421 (see Figures 4 and 5) arranged along the optical path (of the reflected light) between the relevant part (or sector) of the visible surface portion L1 illuminated by the light source 41 and the image sensor 420.

Preferably, the polarising filter 421 is configured to allow the respective still and/or video polarisation camera 42 to acquire raw (RAW) frames of the (same) relative part (or sector) of the visible surface portion L1 illuminated by the light source 41 polarised at different specific angles (e.g., 45° rotations, 60° rotations, or non-uniformly distributed rotations). The polarising filter 421 comprises (or consists of) a polarisation mosaic (see Figure 4) aligned with the pixel grid of the image sensor, so that different pixels receive light at different linear polarisation angles (e.g., at 0°, 45°, 90° and 135°), so that each still and/or video polarisation camera is able to simultaneously capture raw frames at four different linear polarisations.

By way of example, the polarising filter 421 comprises or consists of a polarisation mosaic aligned with the pixel grid of the image sensor 420, so that different pixels receive light at different linear polarisation angles (e.g., at 0°, 45°, 90° and 135°), so that each still and/or video polarisation camera 42 is capable of simultaneously or simultaneously capturing raw frames at four different linear polarisations of the same (fixed) frame (i.e., of the same relative part of the visible surface portion L1 illuminated by the light source 41).

A polarising mosaic filters light according to linear polarisation, such that different pixels receive light at different linear polarisation angles (e.g: 0°, 45°, 90° and 135°, or 0°, 60° and 120°). Consequently, each still and/or video polarisation camera 42 provided with a polarising mosaic mounted on the image sensor 420 is capable of simultaneously capturing (frames and) light with four different linear polarisations.

For example, the polarising mosaic can comprise four different polarisations (or a different number as required).

Each still and/or video polarisation camera 42 acquires (input) polarised raw frames of the same relative part of the visible surface portion L1 illuminated by the light source 41. All polarised raw frames acquired by the same still and/or video polarisation camera 42 are acquired from the same position and orientation of the respective still and/or video polarisation camera 42 with respect to the support plane 21 (i.e. with respect to the relative part of the visible surface portion L1 illuminated by the light source 41 being imaged). Each still and/or video polarisation camera 42 can be configured to detect light in various portions of the electromagnetic spectrum in the range of light visible to the human eye. The optical axes of the still and/or video polarisation cameras 42 are parallel to each other (lying in mutually parallel planes) and are all aligned (i.e. pointing in the same direction towards the support plane 21), so that their respective fields of view (only partially overlapping at opposite lateral ends, for example by a few millimetres) capture the relative part of (elongated, full-width) visible surface portion L1 illuminated by the light source 41, for example with the same inclination and/or distance.

In particular, the optical axis of each still and/or video polarisation camera 42 is incident the support plane 21 and inclined with respect to the support plane 21 by an acute angle, preferably symmetrical (and equal in modulus) with respect to the acute angle of incidence of the light beam emitted by the light source 41.

The detection apparatus 40 and/or the device 10 comprises at least one electronic control unit 43 operatively connected to at least the still and/or video polarisation camera 42, in particular to each of them or one for each of them (then operatively connected to a common controller).

The electronic control unit 43 comprises, for example, a processor module, such as a microprocessor or processor (suitably programmed), and a memory module.

The raw polarised frames acquired by each still and/or video polarisation camera 42 are sent to the electronic control unit 43 for processing (and interpolation) thereof, as further described below, and the emission - as output - of a combined (processed) image, also referred to as a polarised image.

In particular, the electronic control unit 43 is configured to acquire a plurality of raw polarised frames (simultaneous, i.e. of the same part of visible surface portion L1 illuminated by the light source 41 and for each still and/or video polarisation camera 42).

In addition, the electronic control unit 43 is configured to generate/calculate, from the acquired (simultaneous) raw polarised frames, representation tensors comprising at least one of:
(i) Angle of Linear Polarization (AOLP) maps.
(ii) Degree of Linear Polarisation (DOLP) maps,
(iii) Stokes vectors or their transformations.

Again, the electronic control unit 43 is configured to calculate/determine a combined/polarised image (of the relative part of visible surface portion L1 illuminated by the light source 41) on the basis of or as a function of the aforementioned representation tensors (e.g. by interpolation thereof).

For example, the aforesaid representation tensors are used as input for characterisation algorithms that output (for each tensor ennuple) a combined image.

In practice, the electronic control unit 43 extracts from raw polarised frames, representation tensors in a representation space (or "first tensors" in "first representation spaces", such as polarisation feature maps) to be provided as input to surface characterisation algorithms or other computer vision algorithms. These tensors may include AOLP (angle of linear polarisation) maps, DOLP (degree of linear polarisation) maps, or representations based on Stokes vectors.

As is well known, a beam of light (from the light source 41) reflected by the relative part of illuminated visible surface portion L1, which strikes the image sensor 420 of the relevant still and/or video polarisation camera 42 has three measurable components: light intensity (intensity image/I), linear polarisation percentage (degree/DOLP/p) and polarisation direction (angle/AOLP/θ). These properties provide information on the curvature and surface material of the surface L1 of the slab, which can be used to detect defects in the surface L1 of the slab (even defects that are not detectable with the naked eye or the usual industrial inspection techniques).

The combined image obtained from the single ennuple of polarised raw frames obtained from each still and/or video polarisation camera 42 for the relative part of visible surface portion L1 is combined with that obtained from the other still and/or video polarisation cameras 42, so as to obtain a combined image of the entire strip (i.e. the entire illuminated visible surface portion L1), which is then - as the slab advances along the advancement direction A - composed to obtain a combined image of the entire surface L1 of the slab L. In practice, the detection apparatus 40 (i.e., the set of still and/or video polarisation cameras 42) is configured to detect a combined (or polarised) image of the entire (illuminated) surface L1 of the slab L, both in width and in length, as the slab L transits below it during the relative motion between the slab L (in motion on the support plane 21) and the detection apparatus 40.

Such a combined (aggregate) image provides additional clues and information (that cannot be obtained from individual raw polarised frames and/or a single image provided by a non-polarised still and/or video camera) that can be detected and recognised by machine vision algorithms and defect detection techniques (e.g. using trained neural networks or other defect selection and detection algorithms).

In practice, such a combined image hides any graphic features of the surface L1 of the slab L (such as a design or otherwise) and highlights (prominently and e.g. polychromatically) any defects with respect to the flatness and/or glossiness of the surface L1 of the slab L.

The electronic control unit 43 is configured to identify a defect (among those mentioned above) in the combined generated image, e.g. by identifying one or more of its distinctive physical characteristics, such as shape, size, intensity, depth, spatial location (in the surface L1), etc.

The electronic control unit 43 is, for example, connected to a user interface 44 (e.g. remote and/or mobile and/or fixed to the outside of the support casing 30), such as a (touch) screen and/or a terminal or the like, through which a user can input values and/or receive information relating to outputs transmitted and/or received by the electronic control unit 43.

The electronic control unit 43, preferably, is configured to detect the aforementioned defects (derivable from the lapping process) on a surface L1 of any (and each) slab L in transit on the support plane 21 (and scanned by the detection apparatus 40), e.g. in the entire surface L1 of the slab L.

In particular, the electronic control unit 43, for each slab L, is configured to receive/acquire, as input, a combined (overall) image of the (entire) visible surface L1, as obtained above.

In addition, the electronic control unit 43 is configured to analyse (each) combined (overall) received image, as described below.

In a particularly detailed embodiment, the processing carried out by the electronic control unit 43 to identify a defect from polarised raw frames comprises a sequence of operational steps.

In a first step, the electronic control unit 43 is configured to perform synchronous image acquisition of the moving slab L, reconstructing a geometrically coherent two-dimensional image from successive image strips synchronised with the advancement of the slab. Next, the electronic control unit 43 is configured to extract, from the raw images, a polarimetric map, e.g. a Degree of Polarisation (DoP) map, in which the value of each pixel is indicative of the surface micro-structure.

At a later stage, the electronic control unit 43 is further configured to apply a non-uniformity, or "flat-field" correction to the polarimetric map to compensate for systematic artefacts due to illumination or the video camera.

The electronic control unit 43 can also perform image orientation normalisation to align the image of the slab with a geometric reference, making the analyses comparable.

To emphasise defects, the electronic control unit 43 is configured to apply at least one filter, preferably a filter bank, e.g. convolutional filters, designed to emphasise specific families of defects, such as linear or point defects, and attenuate noise.

The electronic control unit 43 then proceeds with a segmentation step, in which the filter responses are binarised to identify objects representing possible defects, and a vector of geometric and photometric characteristics is calculated for each object.

Finally, in a post-processing step, the electronic control unit 43 is configured to logically interpret said objects, e.g. by joining fragments to reconstruct real defects and applying quality filters based on size and shape, and then calculating a defect score leading to a final decision on the quality of the slab.

In detail, the electronic control unit 43 is configured to identify (at least) one defect, e.g. a defect selected from the group comprising or consisting of scratches, peeling and/or un-lapped/polished parts), in the combined image detected.

For example, as mentioned, the defect is represented in the combined image detected by one or more pixels or zones having a different colour parameter (e.g. colour or intensity or the like) from the background (prevailing and substantially uniform colour) that defines the correctly processed zones.

Of the detected defect, the electronic control unit 43 is configured to determine/calculate/measure the shape, size (e.g. one or more of the dimensions from length, width, area or the like) and intensity (which is an indicative parameter of the depth/height of the detected defect).

The electronic control unit 43 is, for example, configured to determine a position (on a virtual XY Cartesian system of the image and thus the surface L1 of the slab L) of the detected defect.

The classification of identified defects proceeds according to known standards, e.g. by imposing an acceptability threshold and/or matching a quality grade (or class) to the examined slab L.

For example, the electronic control unit 43 may be configured to compare certain dimensional parameters of the detected defect (and only the defect), such as one or more dimensions, shape, area, (chromatic) intensity or other parameters, with respective reference dimensional parameters (such as a predetermined reference dimension, reference shape, reference area, reference (chromatic) intensity or other), which are stored in the memory of the electronic control unit 43.

If (and only if) the detected defect has a dimensional parameter that compared with the respective predetermined dimensional reference parameter has a certain relevance/correspondence/affinity/discrepancy, then the electronic control unit 43 is configured to classify the slab L and/or the defect and/or indicate/make available to a display device, i.e. to the user interface 44 (or other graphical interface), the detected defect (e.g. by adding an alarm signal).

For example, in such a case, it is possible to differentiate one slab L (as a reject, first choice, second choice, third choice, etc.) from the others, according to a certain tolerance scale with respect to the settable dimensional reference parameters.

The electronic control unit 43 is preferably configured to perform the surface defect detection on each slab L passing through the support 20 along the advancement direction A.

The device 10 may comprise additional apparatus for detecting other parameters and/or defects of the slab L.

For example, the device 10 could comprise a measuring apparatus 50, e.g. also arranged (fully or partially) within the same support casing 30.

The measuring apparatus 50 is, for example, configured to determine the so-called gauge, i.e. the linear dimensions (width and length) of the slab L, in transit on the support plane 21 along the advancement direction A and/or to perform a (three-dimensional) scan, i.e. to determine a three-dimensional reconstruction of the profile and/or morphology, of the surface L1 of the slab L, in transit on the support plane 21 along the advancement direction A.

For example, the measuring apparatus 50 comprises a first video camera 51, preferably a matrix (monochrome) camera, preferably elongated along a longitudinal axis parallel to the support plane 21 (horizontal) and orthogonal to the advancement direction A.

The first video camera 51 is arranged above the support plane 21 (e.g., at a portion of the front thereof, i.e., placed downstream of the detection apparatus 40) at a non-zero distance from it, with its optical axis facing it, preferably vertical.

The first video camera 51 has a length substantially equal to the width of the support plane 21 (and/or the maximum width of the slabs L to be processed in the production line or verified by the device 10), so as to detect an image (of a strip of the surface L1) over an entire width of the slab L in transit on the support plane 21.

For example, the measuring apparatus 50 comprises a laser illuminator 52 configured to emit a laser so that it is directed towards the support plane 21 at a predetermined inclination with respect to the support plane 21 (i.e. such that it scans the surface L1 of the slab L in transit).

Specifically, the emitted laser is directed along a prevailing emission direction incident to the support plane 21 and inclined with respect to the support plane by an acute angle, preferably comprised between 30° and 40°, e.g. 35°.

In practice, the light source 52 illuminates a portion (or full-width band) of surface L1 as it advances along the advancement direction A.

In the example, the laser illuminator 52 is attached to the rear wall of the support casing 30 and is configured to direct the light beam emitted at the front (or concurrently) in the advancement sense of the slabs L along the advancement direction A.

The first video camera 51 is configured and positioned to detect a (three-dimensional and, for example, monochrome) image of the (full-width portion or band of) visible surface of (any) slab L that is in transit on the support plane 21 and that is illuminated by the laser illuminator 52.

This image is an image used to define/record the overall flatness of the surface L1 of the slab L (and reconstructs said surface L1 three-dimensionally), possibly determining the thickness of the slab L.

For example, such an image can be used by the electronic control unit 43 to scale any detections made by the detection apparatus 40.

Alternatively or additionally, the measuring apparatus 50 comprises (additionally) an illuminator 53 (LED) configured to emit a light beam so that it is directed towards the support plane 21 at a predetermined inclination with respect to the support plane 21, for example orthogonal to it.

Preferably, the illuminator 53 is placed below the support plane 21 and illuminates the slabs L from below.

In practice, the laser illuminator 52 illuminates a portion (or full-width band) of the slab L as it advances along the advancement direction A.

The first video camera 51 is configured and positioned to take an image (backlit) of the edges (side and front) of the slab L as it transits over the support plane 21.

This further image is an image used to define/record/calculate (generally to determine) the so-called gauge, i.e. the linear dimensions (width and length) of the slab L.

For example, such an image can be used by the electronic control unit 43 to scale/position any detections (of defects) made by the detection apparatus 40.

Alternatively or additionally, the device 10 could comprise a detection apparatus 60, e.g. also arranged (fully or partially) within the same support casing 30.

The detection apparatus 60 is, for example, configured to determine (rough) raised or recessed (textured/three-dimensional) defects on the (entire) L1 surface of the slab L, in transit on the support plane 21 along the advancement direction A.

Such defects are, for example, lumps, cracks or other (larger than those detectable by the detection apparatus 40 only).

For example, the detection apparatus 60 comprises a second video camera 61, preferably a linear one (in which the image sensor is defined by a single row of pixels, preferably elongated along a longitudinal axis parallel to the support plane 21 (horizontal) and orthogonal to the advancement direction A.

The second camera 61 is arranged above the support plane 21 (e.g. at a portion of the same front, i.e. placed downstream of the detection apparatus 40) at a non-zero distance from it, with its optical axis facing it, preferably inclined at an acute angle.

The second video camera 61 has a length substantially equal to the width of the support plane 21 (and/or the maximum width of the slabs L to be processed in the production line or verified by the device 10), so as to detect an image (of a strip of the surface L1) over an entire width of the slab L in transit on the support plane 21.

For example, the detection apparatus 60 comprises a light source, which coincides with (and is) the light source 43 of the detection apparatus 43.

In addition, the detection apparatus 60 comprises a reflective element, for example a mirror 62, which is (arranged just below the polarised still and/or video cameras 42 and is) configured to deflect and reflect the reflected light beam from the surface L1 of the slab L towards the second camera 61.

The second camera 61 is configured and positioned to detect a (three-dimensional and, for example, monochrome) image of the (full-width portion or band of) visible surface of (any) slab L that is in transit on the support plane 21 and that is illuminated by the light source 43.

Such an image is an image used to detect/determine (rough) raised or hollow (textured/three-dimensional) defects, such as lumps or cracks/scratches, on the (entire) surface L1 of the slab L, in transit on the support plane 21 along the advancement direction A.

For example, such an image can be used by the electronic control unit 43 to scale and/or complete any detections made by the detection apparatus 40.

Again, alternatively or additionally, the device 10 could comprise a chromatic measuring apparatus 70, e.g. also arranged (fully or partially) within the same support casing 30. The chromatic measuring apparatus 70 is, for example, configured to determine the so-called chromatic tone and/or chromatic defect of the visible surface L1 of the slab L, in transit on the support plane 21 along the advancement direction A.

For example, the chromatic measuring apparatus 70 comprises a third camera 71, preferably a matrix (colour) camera, preferably elongated along a longitudinal axis parallel to the support plane 21 (horizontal) and orthogonal to the advancement direction A.

The third video camera 71 is arranged above the support plane 21 (e.g. at a portion of the rear thereof, i.e. placed upstream of the light source 43 of the detection apparatus 40) at a non-zero distance from it, with its optical axis facing it, preferably vertical.

The third video camera 71 has a length substantially equal to the width of the support plane 21 (and/or the maximum width of the slabs L to be processed in the production line or verified by the device 10), so as to detect an image (of a strip of the surface L1) over an entire width of the slab L in transit on the support plane 21.

For example, the chromaticity measuring apparatus 70 comprises a plurality (e.g., a number of 4) of illuminators 72 (LED) illuminating the same portion (full width) of the surface L1 of the slab L in transit, each with a prevailing emission angle incident on the support plane 21 and inclined with respect to the support plane by an acute angle, different from the others.

In practice, the illuminators 72 light up the same portion (or full-width band) of surface L1 (framed by the third camera 71) as it advances along the advancement direction A.

In the example, one or more of the illuminators 72 are arranged so as to direct the light beam emitted anteriorly (or concordantly) in the advancement sense of the slabs L along the advancement direction A and one or more of the illuminators 72 are arranged so as to direct the light beam emitted rearwardly (or discordantly) in the advancement sense of the slabs L along the advancement direction A (symmetrically to those facing forward). The third video camera 71 is configured and positioned to detect a (polychromatic) image of the (portion or full-width band of) visible surface of (any) slab L that is in transit on the support plane 21 and that is illuminated by the illuminators 72.

This image is an image used to determine the so-called tone and/or chromatic defect of the visible surface L1 of the slab L, in transit on the support plane 21 along the advancement direction A.

For example, such an image can be used by the electronic control unit 43 to complete any detections made by the detection apparatus 40.

The device 10 can be placed in a ceramic slab processing plant, e.g. at the end of the line, in the so-called sorting (and packaging) line of the slabs L, e.g. upstream of a stacking and/or boxing machine, and such that it provides it with sorting criteria.

The processing plant could also comprise, as illustrated, a centring device 80, placed upstream of the device 10 along the advancement direction (and adjacent thereto), and configured to centre (e.g. with lateral presses) each slab L in transit on the support plane 21 (i.e., so that a vertical median plane of the slab L is arranged at a vertical median plane of the support plane parallel to the advancement direction A.

The invention thus conceived is susceptible to many modifications and variants, all falling within the same inventive concept.

Moreover, all details can be replaced by other technically equivalent elements.

In practice, the materials used, as well as the contingent shapes and sizes, can be whatever according to the requirements without for this reason departing from the scope of protection of the following claims.

### NUMERICAL REFERENCES

Device 10
slab L
surface L1
support 20
support plane 21
advancement direction A
conveyor belt 210
support casing 30
cross member 31
detection apparatus 40
light source 41
still and/or video polarisation camera 42
side-by-side direction B
image sensor 420
polarising filter 421
electronic control unit 43
user interface 44
measuring apparatus 50
first video camera 51
laser illuminator 52
illuminator 53
detection apparatus 60
second video camera 61
mirror 62
chromatic measuring apparatus 70
third video camera 71
illuminators 72
centring device 80

## Claims

1. A device for detecting surface defects on a moving ceramic slab comprising:
- a support plane on which at least one slab transits along an advancement direction parallel to the support plane;
- at least one detection apparatus, wherein the detection apparatus is arranged above the support plane, at a non-zero distance therefrom, wherein:
the detection apparatus comprises:
a light source configured to emit a light beam directed along a prevailing emission direction incident on the support plane to illuminate at least a portion of a visible surface of the slab in transit on the support plane;
at least one still and/or video polarisation camera configured to capture raw polarisation frames corresponding to a plurality of different polarisation states of the visible surface portion illuminated by the light source; and
at least one electronic control unit operationally connected to at least the still and/or video polarisation camera, wherein the electronic control unit is configured to:
- receive one or more raw polarisation frames of the same portion of visible illuminated surface, wherein one or more raw polarisation frames are captured at different polarisations by at least the still and/or video polarisation camera;
- generate a combined image based on the raw polarisation frames received; and
- identify a defect in the generated combined image.

2. The device according to the preceding claim, wherein the detection apparatus comprises a plurality of still and/or video polarisation cameras side-by-side along a side-by-side direction parallel to the support plane and inclined, preferably orthogonal, to the advancement direction, wherein each still and/or video polarisation camera is configured to scan a relative part of said portion of the visible surface illuminated by the light source.

3. The device according to any one of the preceding claims, wherein the electronic control unit is further configured to:
- indicate the detected defect on a display device and, preferably, its position within the image of the slab itself, for example if the detected defect has a size greater than a predetermined reference size and/or an intensity greater than a predetermined reference intensity.

4. The device according to any preceding claim, wherein the generation of the combined image is achieved by calculating the polarisation angle and/or the degree of polarisation and, preferably, linking the angle and degree of polarisation in a single combined image.

5. The device according to any one of the preceding claims, wherein each still and/or video polarisation camera comprises an image sensor, preferably a complementary metal-oxide-semiconductor (CMOS) image sensor, and a polarising filter positioned in the optical path between the visible surface of the ceramic slab and the image sensor.

6. The device according to the preceding claim, wherein the polarising filter comprises a polarisation mosaic aligned with the pixel grid of the image sensor, so that different pixels receive light at different linear polarisation angles (e.g., at 0°, 45°, 90° and 135°), so that each still and/or video polarisation camera is capable of simultaneously capturing raw frames at four different linear polarisations.

7. The device according to any one of the preceding claims, wherein
the light beam is directed along a prevailing emission direction incident on the support plane and inclined with respect to the support plane by an acute angle, preferably comprised between 30° and 40°, e.g. 34°.

8. The device according to any one of the preceding claims, wherein:
the optical axis of each still and/or video polarisation camera intersects the support plane and is inclined relative to the support plane at an acute angle, preferably symmetrical with respect to the acute angle of incidence of the light beam emitted by the light source

9. The device according to any one of the preceding claims, wherein the electronic control unit (43) is further configured to apply a non-uniformity (flat-field) correction to the combined image to reduce longitudinal and transverse systematic artefacts.

10. The device according to any one of the preceding claims, wherein the electronic control unit (43) is further configured to apply to the combined image at least one filter or a bank of convolutional filters to emphasise structures corresponding to predetermined families of defects.

11. The device according to any one of the preceding claims, wherein the electronic control unit (43) is further configured to perform a segmentation of the combined image in order to identify objects representing possible defects and to calculate, for each of said objects, a vector of geometric and/or photometric characteristics.

12. The device according to claim 13, wherein the electronic control unit (43) is further configured to perform logical post-processing of said objects, comprising joining fragmented objects to reconstruct a real defect and calculating a quality score to determine the acceptability of the slab (L).

13. A ceramic slab processing plant comprising:
- at least one centring device; and
- at least one device according to any one of the preceding claims placed downstream of the centring device along the advancement direction.

14. A method for detecting a surface defect on a slab which comprises:
- arranging at least one slab on a support plane;
- irradiating a portion of the slab with a light beam emitted by a light source, wherein the light beam is incident on a surface of the slab and the slab is in relative motion with respect to the light source along an advancement direction parallel to the support plane;
- capturing raw polarisation frames corresponding to a plurality of different polarisation states of the portion of the visible surface illuminated by the light source;
- generating a combined image based on the raw polarisation frames received;
- identifying a defect in the combined generated image; and
- indicating the detected defect on a display device and, preferably, its position within the combined image of the slab, for example if the detected defect has a size greater than a predetermined reference size and/or an intensity greater than a predetermined reference intensity.
